# EUROPEAN PATENT SPECIFICATION

(11) **EP 3 319 293 B1**
(45) Date of publication and mention of the grant of the patent: **27.05.2020**
(21) Application number: 16817194.0
(22) Date of filing: 23.06.2016
(51) Int. Cl.: G06F 21/31, H04L 29/08, H04L 29/06

(54) **CROSS-TERMINAL LOGIN-FREE METHOD AND DEVICE**
ENDGERÄTEÜBERGREIFENDES ANMELDUNGSFREIES VERFAHREN UND VORRICHTUNG
PROCÉDÉ ET DISPOSITIF SANS CONNEXION INTER-TERMINAUX

(30) Priority: 02.07.2015 CN 201510383179
(43) Date of publication of application: 09.05.2018
(73) Proprietor: Alibaba Group Holding Limited, Grand Cayman (KY)
(72) Inventor: FANG, Tengfei, Hangzhou 310099 (CN)
(74) Representative: Conroy, John
(86) International application number: PCT/CN2016/086869
(87) International publication number: WO 2017/000830

(56) References cited:
- CN-A- 101 702 647
- CN-A- 103 281 327
- CN-A- 104 158 883
- CN-A- 104 486 747
- CN-A- 104 486 747
- US-A1- 2005 091 539
- US-A1- 2010 024 005
- US-A1- 2012 291 109

## Description

### Technical field

The present application relates to the field of computers, and in particular, to a cross-terminal login-free method and device.

### Background art

Nowadays, a terminal user usually has multiple terminal devices or multiple types of terminal devices, such as multiple mobile phones, multiple PADs, or multiple computers. When switching from one terminal device to another terminal device to log into an account, a user needs to reenter an account and a password for login, which is not only inconvenient but also prone to error.

In the prior art, a method for implementing automatic login across terminal devices is as follows: if a user who uses a computer for login switches to another terminal device for login, a login web page on the computer generates a QR code including an account and a password. The user scans the QR code by using an APP such as Wechat capable of scanning QR codes. After the scanning, the terminal device to which the user switches logs into the account automatically.

During implementation of the present application, the inventor finds that the prior art has at least the following problems:
The login-free method in the prior art is relative troublesome, and it requires a terminal device to open an APP capable of scanning and find the corresponding scanning function to scan a QR code. If the terminal device does not have an APP capable of scanning a QR code, automatic login cannot be realized. Besides, if the QR code is acquired by others, it threatens the security of the user's account.

US2005/091539 describes a method including registering a user and the user's multiple user devices with a Multiple Device Authentication (MDA) apparatus. A user's registered devices is authenticated by the MDA apparatus and is selected as a master device. One or more slave devices are selected from the registered user devices and added together with the selected master device to an active device table. If a user device accessing the MDA apparatus is in the active device table, causing the user device logon directly and automatically without first authenticating the user device.

CN 104 486 747 describes a device identifier association information. Device identifier association information reflects that the first device is a device binding relationship between the first terminal of the identifier and the second terminal having the second device identifier. Available target account information corresponding to the first terminal includes querying whether the user allows the first terminal to use the account information uploaded by the second terminal to log in to the application by using the account information used by the application to log in to the application.

US2010/024005 describes an identity management method, apparatus, and computer readable article of manufacture tangibly embodying computer readable instructions for executing the identity management method. An association table to record session IDs between the user and corresponding Web application, and association of the IDs is created. Searching is performed by a return module for an associated second session ID in the association table according with a first session ID. The second session ID to the first Web application is returned to provide identity management for a user in a Web environment in which a first Web application accesses a second Web application on behalf of the user.

### Summary of the Invention

The objective of the present invention is to provide a cross-terminal login-free method and device. The present invention is defined by a first independent claim referring to a method (claim 1) and a second independent claim referring to a device in the form of a server (claim 9) configured to perform the method claim 1. Various embodiments are defined by the dependent claims. A server queries a relationship of unique identification information between a terminal device that is logging in at a login IP address and a terminal device that has successfully logged in at the same login IP address and a relationship between the unique identification information and a user login ID of the terminal device that has logged in successfully, so that the terminal device logs in automatically.

A cross-terminal login-free method, which includes:
acquiring, by a server, a login request that is sent by a terminal device and carries unique identification information and a login Internet Protocol (IP) address of the terminal device;
querying, by the server according to the IP address in the login request, whether there exists a terminal device that has logged in successfully at the same IP address in server-stored corresponding relationships among unique identification information, login IP addresses, and user login identities (IDs) of terminal devices that have logged in successfully;
if yes, querying, by the server, whether a corresponding relationship of unique identification information between the terminal device sending the login request and the terminal device that has logged in successfully exists in server-stored corresponding relationships of unique identification information between terminal devices according to the unique identification information in the login request; and
if yes, sending, by the server to a browser corresponding to a current login page of the terminal device, a data cookie corresponding to a user login ID of the terminal device that has logged in successfully, so that the terminal device logs in automatically.

The step of acquiring, by a server, a login request that is sent by a terminal device and carries unique identification information and a login IP address of the terminal device specifically includes:
acquiring, by the server, the login request that is sent by the terminal device when accessing the login page and carries the unique identification information and the login IP address of the terminal device, the unique identification information and the login IP address of the terminal device being acquired by the login page by calling, with JavaScript (JS), a FLASH tool plug-in of the current login page.

A cross-terminal login-free method, which includes:
sending, by a terminal device when accessing a login page, a login request carrying unique identification information and a login IP address of the terminal device to a server; and
acquiring, by the terminal device, a query result that is obtained by the server according to the login request and includes a user login ID of a terminal device that has logged in successfully, so that the terminal device logs in according to the query result.

The step of sending, by a terminal device when accessing a login page, a login request carrying unique identification information and a login IP address of the terminal device to a server specifically includes:
adding, by the terminal device when accessing the login page, the unique identification information and the login IP address of the terminal device to the login request and sending the login request to the server, the unique identification information and the login IP address of the terminal device being acquired by the login page by calling, with JS, a software FLASH tool plug-in of the current login page.

The terminal device logs in according to the query result and specifically includes:
the terminal device automatically logs in by using a data cookie which is in a browser corresponding to the current login page and is corresponding to the user login ID of the terminal device that has logged in successfully, the user login ID being obtained according to the query result and sent by the server.

A server, which includes:
an acquisition module configured to acquire a login request that is sent by a terminal device and carries unique identification information and a login Internet Protocol (IP) address of the terminal device;
a first query module configured to query, according to the IP address in the login request, whether there exists a terminal device that has logged in successfully at the same IP address in server-stored corresponding relationships among unique identification information, login IP addresses, and user login identities (IDs) of terminal devices that have logged in successfully;
a second query module configured to: if yes, query whether a corresponding relationship of unique identification information between the terminal device sending the login request and the terminal device that has logged in successfully exists in server-stored corresponding relationships of unique identification information between terminal devices according to the unique identification information in the login request; and
a sending module configured to: if yes, send, to a browser corresponding to a current login page of the terminal device, a data cookie corresponding to a user login ID of the terminal device that has logged in successfully, so that the terminal device logs in automatically.

The acquisition module is specifically configured to:
acquire the login request that is sent by the terminal device when accessing the login page and carries the unique identification information and the login IP address of the terminal device, the unique identification information and the login IP address of the terminal device being acquired by the login page by calling, with JavaScript (JS), a FLASH tool plug-in of the current login page.

A terminal device, which includes:
a sending module configured to send, when the terminal device accesses a login page, a login request carrying unique identification information and a login IP address of the terminal device to a server; and
an acquisition module configured to acquire a query result that is obtained by the server according to the login request and includes a user login ID of a terminal device that has logged in successfully, so that the terminal device logs in according to the query result.

The sending module is specifically configured to:
when the login page is accessed, add the unique identification information and the login IP address of the terminal device to the login request and send the login request to the server, the unique identification information and the login IP address of the terminal device being acquired by the login page by calling, with JS, a software FLASH tool plug-in of the current login page.

The terminal device logs in according to the query result and specifically includes:
the terminal device automatically logs in by using a data cookie which is in a browser corresponding to the current login page and is corresponding to the user login ID of the terminal device that has logged in successfully, the user login ID being obtained according to the query result and sent by the server.

Compared with the prior art, the embodiments of the present application have at least the following advantages:
In the present application, according to server-stored corresponding relationships of unique identification information between terminal devices and a corresponding relationship, which is stored after a terminal device logs in successfully, among a login IP address, unique identification information, and a user login ID of the terminal device, the server queries, by using a login IP and unique identification information of a terminal device that is currently logging in, a corresponding relationship between unique identification information of a terminal device that has successfully logged in at the login IP and the unique identification information of the terminal device, to determine whether the terminal device that is currently logging in is related to the terminal device that has logged in successfully. If yes, the terminal device that is currently logging in acquires the user login ID of the terminal device that has logged in successfully, so as to log in automatically. In this way, the login process of a terminal device that carries out cross-terminal login is simple, and the terminal device that carries out login does not need to have particular software or hardware, thus reducing requirement limits on a terminal for cross-terminal login. Meanwhile, the terminal device that carries out login should have a same login IP address with a terminal device that has successfully logged in, thereby guaranteeing security of user information.

### Brief Description of the Drawings

FIG. 1 is a first flowchart of a cross-terminal login-free method according to an embodiment of the present application;
FIG. 2 is a second flowchart of a cross-terminal login-free method according to an embodiment of the present application;
FIG. 3 is a schematic diagram of a login-free process according to an embodiment of the present application;
FIG. 4 is a schematic structural diagram of a server according to an embodiment of the present application; and
FIG. 5 is a schematic structural diagram of a terminal device according to an embodiment of the present application.

### Detailed Description of the Embodiments

In the present application, a server queries a relationship of unique identification information between a terminal device that logs in at a login Internet Protocol (IP) address and a terminal device that has successfully logged in at the same login IP address and a relationship between the unique identification information and a user login identity (ID) of the terminal device that has successfully logged in, so that the terminal device logs in automatically.

The technical solutions in the present application are clearly and completed described with reference to the accompanying drawings in the present application. Apparently, the described embodiments are merely some of rather than all embodiments of the present application. All other embodiments obtained by those of ordinary skill in the art on the basis of the embodiments in the present application without paying creative efforts belong to the protection scope of the present application.

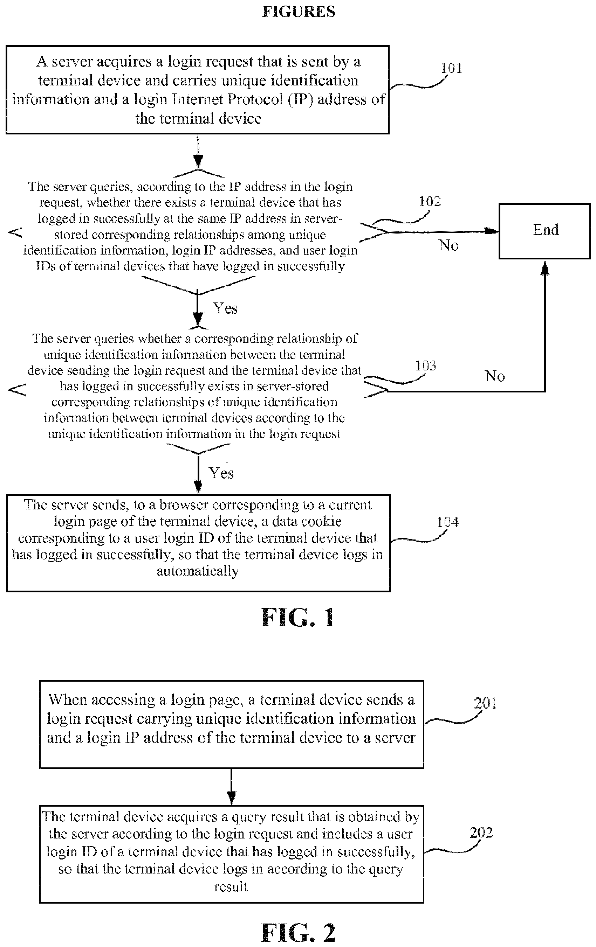

FIG. 1 shows a first embodiment of a cross-terminal login-free method according to the present application. The method includes:
Step 101: A server acquires a login request that is sent by a terminal device and carries unique identification information and a login IP address of the terminal device.

The unique identification information may be a Media Access Control (MAC) address, or may be other exclusive identification information of the terminal device. For example, when the terminal device is a mobile terminal such as a mobile phone, the exclusive identification information thereof may be an International Mobile Equipment Identification Number (IMEI) or an International Mobile Subscriber Identification Number (IMSI), or the like. When the terminal device is a fixed terminal such as a desktop computer, the exclusive identification information thereof may be an ID number of a piece of hardware thereof.

The step of acquiring, by a server, a login request that is sent by a terminal device and carries unique identification information and a login IP address of the terminal device specifically includes:
acquiring, by the server, the login request that is sent by the terminal device when accessing the login page and carries the unique identification information and the login IP address of the terminal device, the unique identification information and the login IP address of the terminal device being acquired by the login page by calling, with JavaScript (JS), a FLASH tool plug-in of the current login page.

Step 102: The server queries, according to the IP address in the login request, whether there exists a terminal device that has logged in successfully at the same IP address in server-stored corresponding relationships among unique identification information, login IP addresses, and user login IDs of terminal devices that have logged in successfully; if yes, step 103 is performed; otherwise, the process is ended.

The server queries whether IP addresses of the terminal device that is currently logging in and the terminal device that has successfully logged in are the same, so as to prove whether the terminal devices are terminal devices in a same local area network, thus guaranteeing the security of user login information.

Step 103: The server queries whether a corresponding relationship of unique identification information between the terminal device sending the login request and the terminal device that has logged in successfully exists in server-stored corresponding relationships of unique identification information between terminal devices according to the unique identification information in the login request; if yes, step 104 is performed; otherwise, the process is ended.

If the corresponding relationship exists, it indicates that there exists a terminal device that has successfully logged in at the same login IP address, and the terminal device that is currently logging in may automatically log in by using the user login ID during login of the terminal device that has successfully logged in. Before the login, it is further necessary to query whether there is a corresponding relationship between the unique identification information of the terminal device that is currently logging in and the unique identification information of the terminal device that has successfully logged in. If yes, it indicates that the terminal devices are different terminal devices of a same user, or terminal devices associated with each other; if no, it indicates that the terminal devices are merely terminal devices of different users in a same local area network, or terminal devices that are not associated with each other.

When a terminal device logs in successfully, the server may store, in the form of a corresponding relationship, unique identification information, a login IP address and a user login ID of the terminal device that logs in successfully.

Corresponding relationships between unique identification information of different terminal devices stored by the server may be obtained in the following manners:
Manner 1:
   A user sends unique identification information of his/her terminal device to a server. The server generates a QR code and sends the QR code to another terminal device, so that the terminal device acquires unique identification information of the other device. Alternatively, the terminal device generates a QR code from its own unique identification information and then sends the QR code to another terminal device, and the terminal device sends a corresponding relationship between unique identification information of the different terminal devices to the server.
Manner 2:
   A user connects different terminal devices by means of Bluetooth. A terminal device acquires unique identification information of another terminal device, and sends a corresponding relationship between its own unique identification information and the unique identification information of the other terminal device to a server.
Manner 3: A terminal device sends its own unique identification information to a Near Field Communication (NFC) device, which sends a corresponding relationship of unique identification information between terminal devices to a server. Certainly, the terminal device may also send its own unique identification information to another device, which sends a corresponding relationship of unique identification information between the terminal devices to the server.

Step 104: The server sends, to a browser corresponding to a current login page of the terminal device, a data cookie corresponding to a user login ID of the terminal device that has logged in successfully, so that the terminal device logs in automatically.

FIG. 2 shows a second embodiment of a cross-terminal login-free method according to the present application. The method includes:
Step 201: When accessing a login page, a terminal device sends a login request carrying unique identification information and a login IP address of the terminal device to a server.

When opening a login page in a browser thereof, the terminal device may automatically send a login request that carries unique identification information and a login IP address of the terminal device to a server, so that the terminal device automatically logs in according to a user login ID of another terminal device that has logged in successfully at the same login IP.

The step of sending, by a terminal device when accessing a login page, a login request carrying unique identification information and a login IP address of the terminal device to a server specifically includes:
adding, by the terminal device when accessing the login page, the unique identification information and the login IP address of the terminal device to the login request and sending the login request to the server, the unique identification information and the login IP address of the terminal device being acquired by the login page by calling, with JS, a software FLASH tool plug-in of the current login page.

Step 202: The terminal device acquires a query result that is obtained by the server according to the login request and includes a user login ID of a terminal device that has logged in successfully, so that the terminal device logs in according to the query result.

Specifically, after receiving the login request that is sent by the terminal device and carries the unique identification information and the login IP, the server queries, according to the IP address, whether there exists a terminal device that has logged in successfully at the same IP address. If yes, the server further queries whether a corresponding relationship between the unique identification information of the terminal device that is currently logging in and the unique identification information of the terminal device that has logged in successfully exists in server-stored corresponding relationships between unique identification information of different terminal devices. If yes, it indicates that the terminal device currently logging in and the terminal device that has logged in successfully are different terminal devices of a same user. According to the found unique identification information of the terminal device that has logged in successfully, the server finds a user login ID of the user who has logged in successfully, so that the terminal device currently logging in automatically logs in according to the user login ID.

The terminal device logs in according to the query result and specifically includes:
The terminal device automatically logs in by using a data cookie which is in a browser corresponding to the current login page and is corresponding to the user login ID of the terminal device that has logged in successfully, the user login ID being obtained according to the query result and sent by the server.

Compared with the prior art, the embodiments of the present application have at least the following advantages:
In the present application, according to server-stored corresponding relationships of unique identification information between terminal devices and a corresponding relationship, which is stored after a terminal device logs in successfully, among a login IP address, unique identification information, and a user login ID of the terminal device, the server queries, by using a login IP and unique identification information of a terminal device that is currently logging in, a corresponding relationship between unique identification information of a terminal device that has successfully logged in at the login IP and the unique identification information of the terminal device, to determine whether the terminal device that is currently logging in is related to the terminal device that has logged in successfully. If yes, the terminal device that is currently logging in acquires the user login ID of the terminal device that has logged in successfully, so as to log in automatically. In this way, the login process of a terminal device that carries out cross-terminal login is simple, and the terminal device that carries out login does not need to have particular software or hardware, thus reducing requirement limits on a terminal for cross-terminal login. Meanwhile, the terminal device that carries out login should have a same login IP address with a terminal device that has successfully logged in, thereby guaranteeing security of user information.

To further illustrate the technical idea of the present application, the technical solution of the present application is described in combination with a specific application scenario. In an actual application, changes in specific scenarios do not affect the protection scope of the present application.

Specifically, it is assumed that a user has two terminal devices. One is a mobile terminal: a mobile phone, and the other is a fixed terminal: a computer.

First, a corresponding relationship between the terminal devices is established. The user is ready to login by using the computer. A current login page acquires a MAC address of the computer through a set FLASH tool plug-in and sends the MAC address to a server. The server generates a QR code according to the MAC address and issues the QR code to the computer. The user scans the QR code by using the mobile phone, to acquire the MAC address of the computer. The mobile phone sends its own MAC address and the acquired MAC address of the computer to the server. The server establishes a corresponding relationship according to the MAC address of the mobile phone and the MAC address of the computer.

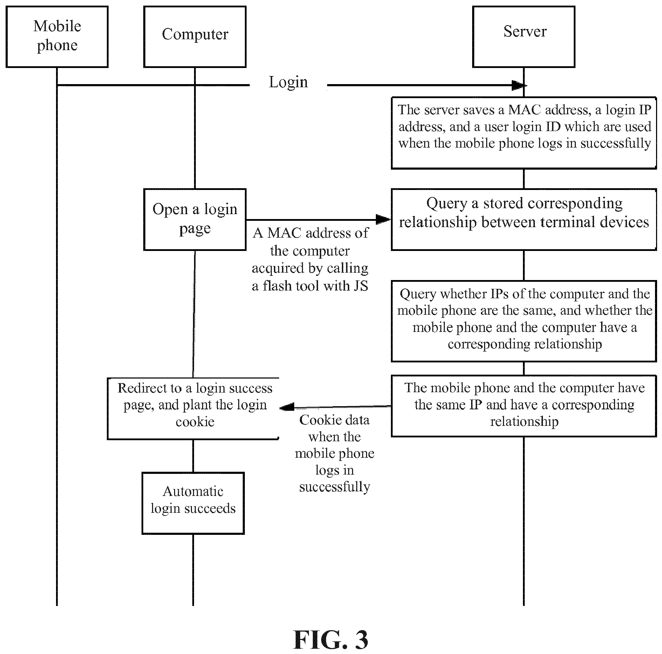

FIG. 3 shows a schematic diagram of a computer login-free process during cross-terminal login. By means of an APP in a mobile phone, a user logs in to a website corresponding to the APP. After the login succeeds, the mobile phone sends its own MAC address, a login IP address of the mobile phone, and a login ID of the user to a server. The server saves the information.

The computer uses a browser to open an access login page of the corresponding website that the APP of the mobile phone logs on to. The login page of the website invokes FLASH of the current page by using JS, to acquire a MAC address and a login IP address of the computer, and sends the MAC address and the login IP address of the computer to the server. The server searches, according to the login IP address of the computer, whether there exists a terminal device that logs in successfully at the same IP address. If the IP address of the mobile phone is the same as the IP address of the computer, it indicates that the mobile phone and the computer are connected to a network at a same port in a same local area network. The server searches for a login MAC address of the mobile phone according to the IP address of the mobile phone, and determines, according to the MAC address of the computer, whether there is a corresponding relationship between the MAC address of the computer and the MAC address of the mobile phone. If yes, it indicates that the mobile phone and the terminal are terminal devices of a same user or terminal devices associated with each other. The server finds, according to the MAC address of the mobile phone, a user login ID that is used when the user logs in through the mobile phone. The server finds, according to the user login ID, a corresponding cookie that is used when the user logs in through the mobile phone. The server sends the cookie to the browser on the computer. The computer logs in automatically according to the cookie in the browser.

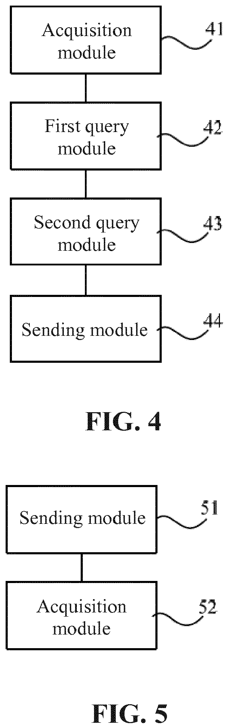

Based on the application conception the same as the foregoing method, the present application further provides a server. As shown in FIG. 4, the server includes:
an acquisition module 41 configured to acquire a login request that is sent by a terminal device and carries unique identification information and a login Internet Protocol (IP) address of the terminal device;
a first query module 42 configured to query, according to the IP address in the login request, whether there exists a terminal device that has logged in successfully at the same IP address in server-stored corresponding relationships among unique identification information, login IP addresses, and user login identities (IDs) of terminal devices that have logged in successfully;
a second query module 43 configured to: if yes, query whether a corresponding relationship of unique identification information between the terminal device sending the login request and the terminal device that has logged in successfully exists in server-stored corresponding relationships of unique identification information between terminal devices according to the unique identification information in the login request; and
a sending module 44 configured to: if yes, send, to a browser corresponding to a current login page of the terminal device, a data cookie corresponding to a user login ID of the terminal device that has logged in successfully, so that the terminal device logs in automatically.

The acquisition module is specifically configured to:
acquire the login request that is sent by the terminal device when accessing the login page and carries the unique identification information and the login IP address of the terminal device, the unique identification information and the login IP address of the terminal device being acquired by the login page by calling, with JavaScript (JS), a FLASH tool plug-in of the current login page.

Based on the application conception the same as the foregoing method, the present application further provides a terminal device. As shown in FIG. 5, the terminal device includes:
a sending module 51 configured to send, when the terminal device accesses a login page, a login request carrying unique identification information and a login IP address of the terminal device to a server; and
an acquisition module 52 configured to acquire a query result that is obtained by the server according to the login request and includes a user login ID of a terminal device that has logged in successfully, so that the terminal device logs in according to the query result.

The sending module is specifically configured to:
when the login page is accessed, add the unique identification information and the login IP address of the terminal device to the login request and send the login request to the server, the unique identification information and the login IP address of the terminal device being acquired by the login page by calling, with JS, a software FLASH tool plug-in of the current login page.

The terminal device logs in according to the query result and specifically includes:
the terminal device automatically logs in by using a data cookie which is in a browser corresponding to the current login page and is corresponding to the user login ID of the terminal device that has logged in successfully, the user login ID being obtained according to the query result and sent by the server.

Compared with the prior art, the embodiments of the present application have at least the following advantages:
In the present application, according to server-stored corresponding relationships of unique identification information between terminal devices and a corresponding relationship, which is stored after a terminal device logs in successfully, among a login IP address, unique identification information, and a user login ID of the terminal device, the server queries, by using a login IP and unique identification information of a terminal device that is currently logging in, a corresponding relationship between unique identification information of a terminal device that has successfully logged in at the login IP and the unique identification information of the terminal device, to determine whether the terminal device that is currently logging in is related to the terminal device that has logged in successfully. If yes, the terminal device that is currently logging in acquires the user login ID of the terminal device that has logged in successfully, so as to log in automatically. In this way, the login process of a terminal device that carries out cross-terminal login is simple, and the terminal device that carries out login does not need to have particular software or hardware, thus reducing requirement limits on a terminal for cross-terminal login. Meanwhile, the terminal device that carries out login should have a same login IP address with a terminal device that has successfully logged in, thereby guaranteeing security of user information.

Those skilled in the art may understand that modules in the device in the embodiment may be distributed in the apparatus of the embodiment according to the description of the embodiment, or corresponding changes may be made so that the modules are located in one or more apparatuses different from this embodiment. The modules in the foregoing embodiment may be combined into one module, or may be further split into multiple sub-modules.

Through the description of the foregoing implementation, those skilled in the art may clearly understand that the present application may be implemented by means of software plus a necessary hardware platform, and certainly may also be implemented by hardware. However, the former is a better implementation in most cases. Based on such an understanding, the essence of technical solution of the present application, or the part contributing to the prior art, may be embodied in the form of a software product. The computer software product is stored in a storage medium, and includes several instructions so as to enable a device (which may be a mobile phone, a personal computer, a server, a network device, or the like) to execute the methods in the embodiments of the present application.

Described above are merely preferred implementations of the present application. The invention is defined by the appended claims.

## Claims

1. A method, executed by a server, for automatic login across terminal devices, comprising:
obtaining a first corresponding relationship that is stored after a terminal device logs in successfully, the first corresponding relationship is stored among unique identification information of the terminal device, a login Internet Protocol address of the terminal device, and a user login identity of the terminal device;
obtaining an second corresponding relationships between unique identification information of terminal devices of the same user;
storing the first corresponding relationship and the second corresponding relationship as server-stored relationships;
acquiring a login request that is sent by a first terminal device and carries first unique identification information of the first terminal device and a first login Internet Protocol address of the first terminal device (101);
querying the server-stored relationships according to the first login Internet Protocol address, whether there exists a second terminal device that has logged in successfully from the same Internet Protocol address (102);
if yes, querying the server-stored relationships according to the first unique identification information whether there exists a relationship between the first unique identification information of the first terminal device and a second unique identification information of the second terminal device indicating that the first terminal device and the second terminal device are of the same user or are associated with each other (103); and
if yes, sending to a browser corresponding to a current login page of the first terminal device, a data cookie corresponding to a user login identity of the second terminal device that has logged in successfully, so that the first terminal device logs in automatically (104).

2. The method of claim 1, wherein the step of acquiring, by the server, the login request that is sent by the first terminal device and carries the first unique identification information of the first terminal device and the first login Internet Protocol address of the first terminal device specifically comprises:
acquiring, by the server, the login request that is sent by the first terminal device when accessing the current login page and carries the first unique identification information and the first login Internet Protocol address of the first terminal device, the first unique identification information and the first login Internet Protocol address of the first terminal device being acquired by the current login page by calling, with JavaScript, a flash tool plug-in of the current login page.

3. The method for automatic login across terminal devices according to claim 1 or claim 2, comprising:
sending, by the first terminal device when accessing a login page, the login request carrying the unique identification information and the first login Internet Protocol address of the first terminal device to the server; and
acquiring, by the first terminal device, a query result that is obtained by the server according to the login request and comprises the user login identities of the second terminal device that has logged in successfully, so that the first terminal device logs in according to the query result.

4. The method according to any of claims 1 to 3, further comprising:
performing a successful login at the second terminal device through an application running on the second terminal device;
in response to the successful login at the second terminal device, storing a corresponding relationship for the second terminal device including mapping between unique identification information, the second login Internet Protocol address, and the user login identities of the second terminal device; and
providing, by the second terminal device a MAC address, a second login Internet Protocol address, and the user login identities of the second terminal device.

5. The method of any of claims 1 to 4, further comprising:
searching, by the server, for the data cookie corresponding to the user login identities of the second terminal device, wherein the data cookie was used by the second terminal device during login successfully.

6. The method of any of claims 1 to 5, further comprising:
obtaining, by the server, relationships between unique identification information of different terminal devices comprising:
the second terminal device, sending the unique identification information of the second terminal device to the server;
generating and sending, by the server, a quick-response code corresponding to the unique identification information of the second terminal device to the first terminal device;
the first terminal device, sending the corresponding relationship of unique identification information of the different terminal devices to the server.

7. The method of claim 3, further comprising:
obtaining relationships between unique identification information of different terminal devices comprising:
the first terminal device, acquiring the unique identification information of the second terminal device from the second terminal device via connection established with a short-range communication;
sending, by the first terminal device, the corresponding relationship of unique identification information between the first terminal device and the second terminal device to the server.

8. The method of claim 3, wherein the first terminal device logs in according to the query result, comprising:
the first terminal device automatically logs in by using the data cookie which is in the browser corresponding to the current login page and is corresponding to the user login identities of the second terminal device that has logged in successfully, the user login identities being obtained according to the query result and sent by the server.

9. A server for automatic login across terminal devices, the server implemented by software, hardware, or a combination of hardware and software, the server configured to perform the method of any one of claims 1 to 8.

10. A computer system comprising:
a server according to claim 9; and
terminal devices, wherein a first terminal device from the terminal devices is configured to:
send the login request associated with accessing a login page, the login request carrying unique identification information and a login Internet Protocol address of the first terminal device to the server; and
acquire, by the first terminal device, a query result that is obtained by the server according to the login request and comprises the user login identity of the second terminal device that has logged in successfully, so that the first terminal device logs in according to the query result.

11. The computer system of claim 10, wherein the server searches for the data cookie corresponding to the user login identity of the second terminal device, wherein the data cookie was used by the second terminal device during login successfully.

12. The computer system of claim 10, wherein the server is further operable to:
obtain relationships between unique identification information of different terminal devices, wherein obtaining the relationships comprises:
the second terminal device, sending the unique identification information of the second terminal device to the server;
generating and sending, by the server, a quick response code corresponding to the unique identification information of the second terminal device to the first terminal device; and
the first terminal device, sending the corresponding relationship of unique identification information between the first terminal device and the second terminal device to the server.

13. The computer system of claim 10, wherein the server is further operable to:
obtain relationships between unique identification information of different terminal devices comprising:
the first terminal device, acquiring the unique identification information of the second terminal device from the second terminal device via connection;
receiving, by the first terminal device, the corresponding relationship of unique identification information between the first terminal device and the second terminal device.

14. The computer system of claim 10, wherein the first terminal device logs in according to the query result, comprising:
the first terminal device automatically logs in by using a the data cookie which is in the browser corresponding to the current login page and is corresponding to the user login identities of the second terminal device that has logged in successfully, the user login identities being obtained according to the query result and sent by the server.

## Patentansprüche

1. Von einem Server ausgeführtes Verfahren zur automatischen, endgeräteübergreifenden Anmeldung, umfassend:
Erhalten einer ersten entsprechenden Beziehung, die gespeichert wird, nachdem sich ein Endgerät erfolgreich angemeldet hat, wobei die erste entsprechende Beziehung zwischen eindeutigen Identifikationsinformationen des Endgeräts, einer Anmelde-Internetprotokolladresse des Endgeräts und einer Benutzeranmeldeidentität des Endgeräts gespeichert wird;
Erhalten einer zweiten entsprechenden Beziehung zwischen eindeutigen Identifikationsinformationen von Endgeräten desselben Benutzers;
Speichern der ersten entsprechenden Beziehung und der zweiten entsprechenden Beziehung als Server-gespeicherte Beziehungen;
Erfassen einer Anmeldeanforderung, die von einem ersten Endgerät gesendet wird und erste eindeutige Identifikationsinformationen des ersten Endgeräts und eine erste Anmelde-Internetprotokolladresse des ersten Endgeräts (101) enthält;
Abfragen der Server-gespeicherten Beziehungen gemäß der ersten Anmelde-Internetprotokolladresse hinsichtlich dessen, ob ein zweites Endgerät vorhanden ist, das sich erfolgreich von derselben Internetprotokolladresse (102) aus angemeldet hat;
wenn ja, Abfragen der Server-gespeicherten Beziehungen gemäß den ersten eindeutigen Identifikationsinformationen hinsichtlich dessen, ob eine Beziehung zwischen den ersten eindeutigen Identifikationsinformationen des ersten Endgeräts und zweiten eindeutigen Identifikationsinformationen des zweiten Endgeräts besteht, die angibt, dass das erste Endgerät und das zweite Endgerät vom selben Benutzer oder miteinander verbunden (103) sind; und
wenn ja, Senden eines Datencookies, das einer Benutzeranmeldeidentität des zweiten Endgeräts entspricht, das sich erfolgreich angemeldet hat, an einen Browser in Entsprechung zu einer aktuellen Anmeldeseite des ersten Endgeräts, so dass sich das erste Endgerät automatisch anmeldet (104).

2. Verfahren nach Anspruch 1, wobei der Schritt des Erfassens der Anmeldeanforderung durch den Server, die vom ersten Endgerät gesendet wird und die ersten eindeutigen Identifikationsinformationen des ersten Endgeräts und die erste Anmelde-Internetprotokolladresse des ersten Endgeräts enthält, spezifisch umfasst:
Erfassen der Anmeldeanforderung durch den Server, die vom ersten Endgerät beim Zugriff auf die aktuelle Anmeldeseite gesendet wird und die die ersten eindeutigen Identifikationsinformationen und die erste Anmelde-Internetprotokolladresse des ersten Endgeräts enthält, wobei die ersten eindeutigen Identifikationsinformationen und die erste Anmelde-Internetprotokolladresse des ersten Endgeräts von der aktuellen Anmeldeseite erfasst werden, indem mit JavaScript ein Flash-Tool-Plug-In der aktuellen Anmeldeseite aufgerufen wird.

3. Verfahren für die automatische endgeräteübergreifende Anmeldung nach Anspruch 1 oder Anspruch 2, umfassend:
Senden der Anmeldeanforderung, die die eindeutigen Identifikationsinformationen und die erste Anmelde-Internetprotokolladresse des ersten Endgeräts enthält, durch das erste Endgerät beim Zugriff auf eine Anmeldeseite an den Server; und
Erfassen eines Abfrageergebnisses durch das erste Endgerät, das vom Server gemäß der Anmeldeanforderung erhalten wird und die Benutzeranmeldeidentitäten des zweiten Endgeräts umfasst, das sich erfolgreich angemeldet hat, so dass sich das erste Endgerät gemäß dem Abfrageergebnis anmeldet.

4. Verfahren nach einem der Ansprüche 1 bis 3, ferner umfassend:
Durchführen einer erfolgreichen Anmeldung am zweiten Endgerät über eine Anwendung, die auf dem zweiten Endgerät ausgeführt wird;
als Antwort auf die erfolgreiche Anmeldung am zweiten Endgerät Speichern einer entsprechenden Beziehung für das zweite Endgerät, einschließlich der Zuordnung zwischen eindeutigen Identifikationsinformationen, der zweiten Anmelde-Internetprotokolladresse und den Benutzeranmeldeidentitäten des zweiten Endgeräts; und
Bereitstellen einer MAC-Adresse, einer zweiten Anmelde-Internetprotokolladresse und der Benutzeranmeldeidentitäten des zweiten Endgeräts durch das zweite Endgerät.

5. Verfahren nach einem der Ansprüche 1 bis 4, ferner umfassend:
Suchen nach dem Datencookie, das den Benutzeranmeldeidentitäten des zweiten Endgeräts entspricht, durch den Server, wobei das Datencookie vom zweiten Endgerät während der Anmeldung erfolgreich verwendet wurde.

6. Verfahren nach einem der Ansprüche 1 bis 5, ferner umfassend:
Erhalten von Beziehungen zwischen eindeutigen Identifikationsinformationen verschiedener Endgeräte durch den Server, umfassend:
Senden der eindeutigen Identifikationsinformationen des zweiten Endgeräts an den Server durch das zweite Endgerät;
Erzeugen und Senden durch den Server eines Schnellantwortcodes in Entsprechung zu den eindeutigen Identifikationsinformationen des zweiten Endgeräts an das erste Endgerät;
Senden der entsprechenden Beziehung der eindeutigen Identifikationsinformationen der verschiedenen Endgeräte an den Server durch das erste Endgerät.

7. Verfahren nach Anspruch 3, ferner umfassend:
Erhalten von Beziehungen zwischen eindeutigen Identifikationsinformationen verschiedener Endgeräte, umfassend:
Erfassen der eindeutigen Identifikationsinformationen des zweiten Endgeräts von dem zweiten Endgerät über eine Verbindung, die mit einer Kurzstreckenkommunikation hergestellt wurde, durch das erste Endgerät;
Senden der entsprechenden Beziehung eindeutiger Identifikationsinformationen zwischen dem ersten Endgerät und dem zweiten Endgerät durch das erste Endgerät an den Server.

8. Verfahren nach Anspruch 3, wobei sich das erste Endgerät entsprechend dem Abfrageergebnis anmeldet, umfassend:
automatisches Anmelden des ersten Endgeräts unter Verwendung des Datencookies, das sich entsprechend der aktuellen Anmeldeseite im Browser befindet und das den Benutzeranmeldeidentitäten des zweiten Endgeräts entspricht, das sich erfolgreich angemeldet hat, wobei die Benutzeranmeldeidentitäten gemäß dem Abfrageergebnis erhalten und vom Server gesendet werden.

9. Server für die automatische, endgeräteübergreifende Anmeldung, wobei der Server durch Software, Hardware oder eine Kombination aus Hardware und Software implementiert wird und dazu konfiguriert ist, das Verfahren nach einem der Ansprüche 1 bis 8 auszuführen.

10. Computersystem, umfassend:
einen Server nach Anspruch 9; und
Endgeräte, wobei ein erstes Endgerät von den Endgeräten dazu konfiguriert ist:
die Anmeldeanforderung in Verbindung mit dem Zugriff auf eine Anmeldeseite an den Server zu senden, wobei die Anmeldeanforderung eindeutige Identifikationsinformationen und eine Anmelde-Internetprotokolladresse des ersten Endgeräts enthält, und
vom ersten Endgerät ein Abfrageergebnis zu erhalten, das vom Server gemäß der Anmeldeanforderung erhalten wird und die Benutzeranmeldeidentität des zweiten Endgeräts umfasst, das sich erfolgreich angemeldet hat, so dass sich das erste Endgerät gemäß dem Abfrageergebnis anmeldet.

11. Computersystem nach Anspruch 10, wobei der Server nach dem Datencookie sucht, das der Benutzeranmeldeidentität des zweiten Endgeräts entspricht, wobei das Datencookie vom zweiten Endgerät während der Anmeldung erfolgreich verwendet wurde.

12. Computersystem nach Anspruch 10, wobei der Server ferner für Folgendes nutzbar ist:
Beziehungen zwischen eindeutigen Identifikationsinformationen verschiedener Endgeräte zu erhalten, wobei das Erhalten der Beziehungen umfasst:
Senden der eindeutigen Identifikationsinformationen des zweiten Endgeräts an den Server durch das zweite Endgerät;
Erzeugen und Senden eines Schnellantwortcodes durch den Server, der den eindeutigen Identifikationsinformationen des zweiten Endgeräts entspricht, an das erste Endgerät; und Senden der entsprechenden Beziehung von eindeutigen Identifikationsinformationen zwischen dem ersten Endgerät und dem zweiten Endgerät an den Server durch das erste Endgerät.

13. Computersystem nach Anspruch 10, wobei der Server ferner für Folgendes nutzbar ist:
Beziehungen zwischen eindeutigen Identifikationsinformationen verschiedener Endgeräte zu erhalten, Folgendes umfassend:
Erfassen, durch das erste Endgerät, der eindeutigen Identifikationsinformationen des zweiten Endgeräts vom zweiten Endgerät über eine Verbindung;
Empfangen der entsprechenden Beziehung von eindeutigen Identifikationsinformationen zwischen dem ersten Endgerät und dem zweiten Endgerät durch das erste Endgerät.

14. Computersystem nach Anspruch 10, wobei sich das erste Endgerät entsprechend dem Abfrageergebnis anmeldet, umfassend:
automatisches Anmelden des ersten Endgeräts unter Verwendung eines Datencookies, das sich im Browser befindet und der aktuellen Anmeldeseite entspricht und den Benutzeranmeldeidentitäten des zweiten Endgeräts entspricht, das sich erfolgreich angemeldet hat, wobei die Benutzeranmeldeidentitäten entsprechend dem Abfrageergebnis erhalten und vom Server gesendet werden.

## Revendications

1. Procédé, exécuté par un serveur, de connexion automatique entre différents terminaux, comprenant :
l'obtention d'une première relation correspondante qui est stockée après qu'un terminal a réussi à se connecter, la première relation correspondante étant stockée parmi des informations d'identification uniques du terminal, une adresse de protocole Internet de connexion du terminal et une identité de connexion d'utilisateur du terminal ;
l'obtention d'une seconde relation correspondante entre des informations d'identification uniques de terminaux du même utilisateur ;
le stockage de la première relation correspondante et de la seconde relation correspondante en tant que relations stockées sur le serveur ;
l'acquisition d'une demande de connexion qui est envoyée par un premier terminal et qui transporte de premières informations d'identification uniques du premier terminal et d'une première adresse de protocole Internet de connexion du premier terminal (101) ;
l'interrogation des relations stockées sur le serveur selon la première adresse de protocole Internet de connexion, afin de déterminer s'il existe un second terminal qui a réussi à se connecter à partir de la même adresse de protocole Internet (102) ;
si oui, l'interrogation des relations stockées sur le serveur selon les premières informations d'identification uniques afin de déterminer s'il existe une relation entre les premières informations d'identification uniques du premier terminal et les secondes informations d'identification uniques du second terminal indiquant que le premier terminal et le second terminal sont du même utilisateur ou sont associés l'un à l'autre (103) ; et
si oui, l'envoi à un navigateur correspondant à une page de connexion actuelle du premier terminal, un témoin de données correspondant à une identité de connexion d'utilisateur du second terminal qui a réussi à se connecter, de telle sorte que le premier terminal se connecte automatiquement (104).

2. Procédé selon la revendication 1, dans lequel l'étape d'acquisition, par le serveur, de la demande de connexion qui est envoyée par le premier terminal et qui transporte les premières informations d'identification uniques du premier terminal et de la première adresse de connexion de protocole Internet du premier terminal comprend spécifiquement :
l'acquisition, par le serveur, de la demande de connexion qui est envoyée par le premier terminal lors de l'accès à la page de connexion actuelle et qui transporte les premières informations d'identification uniques et de la première adresse de protocole Internet de connexion du premier terminal, les premières informations d'identification uniques et le première adresse de protocole Internet de connexion du premier terminal étant acquises par la page de connexion actuelle en appelant, à l'aide de JavaScript, un plug-in d'outil flash de la page de connexion actuelle.

3. Procédé de connexion automatique entre différents terminaux selon la revendication 1 ou la revendication 2, comprenant :
l'envoi, par le premier terminal lors de l'accès à une page de connexion, de la demande de connexion transportant les informations d'identification uniques et de la première adresse de protocole Internet de connexion du premier terminal au serveur ; et
l'acquisition, par le premier terminal, d'un résultat d'interrogation qui est obtenu par le serveur conformément à la demande de connexion et comprend les identités de connexion d'utilisateur du second terminal qui a réussi à se connecter, de telle sorte que le premier terminal se connecte conformément au résultat de l'interrogation.

4. Procédé selon l'une quelconque des revendications 1 à 3, comprenant en outre :
la réalisation d'une connexion réussie au niveau du second terminal par le biais d'une application s'exécutant sur le second terminal ;
en réponse à la connexion réussie au niveau du second terminal, le stockage d'une relation correspondante pour le second terminal comportant un mappage entre des informations d'identification uniques, la seconde adresse de protocole Internet de connexion et les identités de connexion d'utilisateur du second terminal ; et
la fourniture, par le second terminal, d'une adresse MAC, d'une seconde adresse de protocole Internet de connexion, et des identités de connexion d'utilisateur du second terminal.

5. Procédé selon l'une quelconque des revendications 1 à 4, comprenant en outre :
la recherche, par le serveur, du témoin de données correspondant aux identités de connexion d'utilisateur du second terminal, le témoin de données ayant été utilisé par le second terminal lors de la connexion réussie.

6. Procédé selon l'une quelconque des revendications 1 à 5, comprenant en outre :
l'obtention, par le serveur, de relations entre des informations d'identification uniques de différents terminaux comprenant :
l'envoi par le second terminal des informations d'identification uniques du second terminal au serveur ;
la génération et l'envoi, par le serveur, d'un code QR correspondant aux informations d'identification uniques du second terminal au premier dispositif terminal ;
l'envoi par le premier terminal de la relation correspondante d'informations d'identification uniques des différents terminaux au serveur.

7. Procédé selon la revendication 3, comprenant en outre :
l'obtention de relations entre des informations d'identification uniques de différents terminaux comprenant :
l'acquisition par le premier terminal des informations d'identification uniques du second terminal à partir du second terminal par le biais d'une connexion établie à l'aide d'une communication de courte distance ;
l'envoi, par le premier terminal, de la relation correspondante d'informations d'identification uniques entre le premier terminal et le second terminal au serveur.

8. Procédé selon la revendication 3, dans lequel le premier terminal se connecte en fonction du résultat de l'interrogation, comprenant :
la connexion automatique du premier terminal en utilisant le témoin de données qui se trouve dans le navigateur correspondant à la page de connexion actuelle et qui correspond aux identités de connexion d'utilisateur du second terminal qui a réussi à se connecter, les identités de connexion d'utilisateur étant obtenues conformément au résultat de l'interrogation et envoyées par le serveur.

9. Serveur permettant une connexion automatique entre différents terminaux, le serveur étant mis en œuvre par logiciel, matériel ou une combinaison de matériel et de logiciel, le serveur étant configuré pour réaliser le procédé de l'une quelconque des revendications 1 à 8.

10. Système informatique comprenant :
un serveur selon la revendication 9 ; et
des terminaux, un premier terminal parmi les terminaux étant configuré pour :
envoyer la demande de connexion associée à l'accès à une page de connexion, la demande de connexion transportant des informations d'identification uniques et d'une adresse de protocole Internet de connexion du premier terminal au serveur ; et
acquérir, par le premier terminal, un résultat d'interrogation qui est obtenu par le serveur conformément à la demande de connexion et qui comprend l'identité de connexion d'utilisateur du second terminal qui a réussi à se connecter, de telle sorte que le premier terminal se connecte conformément au résultat
de l'interrogation.

11. Système informatique selon la revendication 10, dans lequel le serveur recherche le témoin de données correspondant à l'identité de connexion d'utilisateur du second terminal, le témoin de données ayant été utilisé par le second terminal lors de la connexion réussie.

12. Système informatique selon la revendication 10, dans lequel le serveur peut en outre fonctionner pour :
obtenir des relations entre des informations d'identification uniques de différents terminaux, l'obtention des relations comprenant :
l'envoi par le second terminal des informations d'identification uniques du second terminal au serveur ;
la génération et l'envoi, par le serveur, d'un code QR correspondant aux informations d'identification uniques du second terminal au premier terminal ; et
l'envoi par le premier terminal de la relation correspondante d'informations d'identification uniques entre le premier terminal et le second terminal au serveur.

13. Système informatique selon la revendication 10, dans lequel le serveur peut en outre fonctionner pour :
obtenir des relations entre des informations d'identification uniques de différents terminaux comprenant :
l'acquisition par le premier terminal des informations d'identification uniques du second terminal provenant du second terminal par le biais d'une connexion ;
la réception, par le premier terminal, de la relation correspondante d'informations d'identification uniques entre le premier terminal et le second terminal.

14. Système informatique selon la revendication 10, dans lequel le premier terminal se connecte selon le résultat de l'interrogation, comprenant :
la connexion automatique du premier terminal en utilisant un témoin de données qui se trouve dans le navigateur correspondant à la page de connexion actuelle et qui correspond aux identités de connexion d'utilisateur du second terminal qui a réussi à se connecter, les identités de connexion d'utilisateur étant obtenues selon le résultat de l'interrogation et envoyées par le serveur.
